# EUROPÄISCHE PATENTSCHRIFT

(11) **EP 2 702 257 B1**
(45) Veröffentlichungstag und Bekanntmachung des Hinweises auf die Patenterteilung: **18.03.2015**
(21) Anmeldenummer: 12716250.1
(22) Anmeldetag: 19.04.2012
(51) Int. Cl.: F02B 29/04, F02D 41/00, F02M 31/07, F02M 35/10

(54) **VERBRENNUNGSMOTOR UND VERFAHREN ZUM BETRIEB EINES VERBRENNUNGSMOTORS MIT AUSLEITUNG VON KONDENSWASSER AUS DEM ANSAUGTRAKT**
COMBUSTION ENGINE AND METHOD FOR OPERATING A COMBUSTION ENGINE HAVING A DISCHARGE LINE FOR CONDENSATION WATER FROM THE INDUCTION TRACT
MOTEUR À COMBUSTION INTERNE ET PROCÉDÉ PERMETTANT DE FAIRE FONCTIONNER UN MOTEUR À COMBUSTION INTERNE PRÉSENTANT UNE ÉVACUATION DE L'EAU DE CONDENSATION HORS DE LA CONDUITE D'ADMISSION

(30) Priorität: 29.04.2011 DE 102011018958
(43) Veröffentlichungstag der Anmeldung: 05.03.2014
(73) Patentinhaber: Audi AG, 85045 Ingolstadt (DE)
(72) Erfinder: PFAB, Christian, 74172 Neckarsulm (DE)
(86) Internationale Anmeldenummer: PCT/EP2012/001680
(87) Internationale Veröffentlichungsnummer: WO 2012/146357

(56) Entgegenhaltungen:
- WO-A1-2007/097750
- WO-A1-2009/002233
- US-A- 2 935 978
- US-A1- 2003 114 978

## Beschreibung

Die Erfindung betrifft ein Verfahren zum Betrieb eines Verbrennungsmotors mit Aufladung und Ladeluftkühlung. Die Erfindung betrifft ferner einen Verbrennungsmotor mit wenigstens einem Verdichter und wenigstens einem dem Verdichter nachgeschalteten Ladeluftkühler.

Unter Aufladung bzw. Motoraufladung wird das Zuführen von verdichteter Ladeluft zum Brennraum eines Verbrennungsmotors verstanden, um die Leistung und/oder den Wirkungsgrad dieses Verbrennungsmotors zu steigern. Das Verdichten wird in der Regel von wenigstens einem Verdichter bewerkstelligt, wobei es sich z. B. um einen Turbolader, einen Kompressor oder dergleichen handeln kann. Der Brennraum umfasst einen oder mehrere Zylinder. Bei der Ladeluft kann es sich um Frischluft oder um ein Luftgemisch (z. B. Treibstoff-Luftgemisch oder Abgas-Luftgemisch) handeln.

Unter Ladeluftkühlung wird das dem Verdichten nachfolgende Herunterkühlen der verdichteten Ladeluft verstanden, wodurch bekanntermaßen die Leistung und/oder der Wirkungsgrad des Verbrennungsmotors weiter erhöht werden kann. Die Ladeluftkühlung wird in der Regel von wenigstens einem Ladeluftkühler bewerkstelligt, wobei es sich z. B. um einen Wärmetauscher handeln kann, der im Ansaugtrakt des Verbrennungsmotor zwischen dem Verdichter und dem Einlass in den Brennraum eingebaut ist.

Problematisch ist, dass die Temperatur der Ladeluft im Ladeluftkühler unter bestimmten Umständen soweit abgesenkt wird, dass ein übersättigter Zustand eintritt, wodurch es im Ladeluftkühler und/oder in dem in Strömungsrichtung des Ladeluftvolumenstroms nachfolgenden Ansaugtrakt zur Kondensatbildung bzw. Kondenswasserbildung und/oder sogar zur Eisbildung kommen kann.

Um dies zu verhindern, wird in der GB 1 255 956 A ein zum Ladeluftkühler paralleler Bypass vorgeschlagen. Damit kann der Ladeluftvolumenstrom in einen Teilvolumenstrom durch den Ladeluftkühler und in einen Teilvolumenstrom durch den Bypass aufgeteilt werden. Durch Zusammenführen des gekühlten Teilvolumenstroms aus dem Ladeluftkühler und des ungekühlten Teilvolumenstroms aus dem Bypass soll eine Kondenswasserbildung verhindert werden. Der Teilvolumenstrom durch den Bypass wird mittels eines Bypassventils in Abhängigkeit von der Temperatur des Ladeluftvolumenstroms nach dem Zusammenführen der Teilvolumenströme angepasst. Ein ähnlicher Vorschlag stammt aus der DE 198 52 766 A1, wobei hier der ungekühlte Teilvolumenstrom aus dem Bypass gleichzeitig noch zur Beheizung der Innenwandung einer zum Brennraumeinlass führenden Rohrleitung verwendet wird.

Um dem Problem der Kondenswasserbildung zu begegnen, wird in der AT 508 010 A4 vorgeschlagen, die Luftfeuchtigkeit der angesaugten Frischluft vor dem Verdichten mit einem Feuchtigkeitssensor zu ermitteln und in Abhängigkeit hiervon die Temperatur der dem Brennraum zugeführten verdichteten Ladeluft anzupassen, was z. B. mittels eines regelbaren Ladeluftkühlers erfolgen soll.

Die vorbekannten Maßnahmen zielen darauf ab, eine Kondenswasserbildung und/oder Eisbildung im Ladeluftkühler und/oder im nachfolgenden Ansaugtrakt während des Normalbetriebs des Verbrennungsmotors zu vermeiden (Kondensationsvermeidung). Es wird jedoch nicht aufgezeigt, wie mit bereits vorhandenem Kondenswasser und/oder Eis zu verfahren ist. Eine Kondenswasserbildung und/oder Eisbildung lässt sich nämlich auch mit den aus dem Stand der Technik bekannten Maßnahmen nicht zuverlässig vermeiden.

Bspw. kann es bei längerem Abstellen des Verbrennungsmotors im Ladeluftkühler und/oder im nachfolgenden Ansaugtrakt zur Kondenswasserbildung und/oder Eisbildung kommen, was beim nächsten Motorstart zu Beeinträchtigungen des Verbrennungsprozesses und/oder zu Motorschäden (Wasserschlag) führen kann.

Der Erfindung liegt daher die Aufgabe zugrunde, hierfür Abhilfe zu schaffen.

Diese Aufgabe wird gelöst von einem erfindungsgemäßen Verfahren mit den Merkmalen des Anspruchs 1. Ferner wird diese Aufgabe gelöst von einem erfindungsgemäßen Verbrennungsmotor mit den Merkmalen des nebengeordneten Anspruchs. Bevorzugte und vorteilhafte Ausgestaltungen und Weiterbildungen sind in den jeweils abhängigen Ansprüchen angegeben. Die nachfolgenden Erläuterungen gelten analog für beide Erfindungsgegenstände.

Das erfindungsgemäße Verfahren zum Betrieb eines Verbrennungsmotors mit Aufladung und Ladeluftkühlung sieht vor, dass in einem kritischen Betriebszustand der Ladeluftvolumenstrom durch einen Ladeluftkühler mittels wenigstens einem Ladeluftkühlerventil derart eingestellt und/oder zeitlich verändert wird, dass im Ladeluftkühler und/oder im nachfolgenden Ansaugtrakt vorhandenes Kondenswasser nur in unschädlichen Mengen dem Brennraum sukzessive zugeführt und somit ausgeleitet wird.

Eine Idee der Erfindung ist es, vorhandenes Kondenswasser, dass sich wie eingangs erläutert typischerweise im Ladeluftkühler und/oder im nachfolgenden Ansaugtrakt angesammelt hat, durch allmähliches und kontrolliertes Zuführen in den Brennraum auszuleiten, was auch als dosiertes Ausleiten bezeichnet werden kann, ohne dass es zu nennenswerten Beeinträchtigungen des Verbrennungsprozesses kommt. Damit besteht auch keine Gefahr für einen Wasserschlag. Das Zuführen des Kondenswassers in den Brennraum wird vom Ladeluftvolumenstrom durch den Ladeluftkühler bewerkstelligt, der einen Mitnahmeeffekt auf das Kondenswasser ausübt. Mittels des Ladeluftkühlerventils ist der Ladeluftvolumenstrom durch den Ladeluftkühler und damit der Mitnahmeeffekt einstellbar und/oder zeitlich veränderbar, womit das dosierte Ausleiten gelingt. Für Kondenswasser in fester Form bzw. für gefrorenes Kondenswasser (bzw. Eis) gilt selbiges, wobei das Eis zunächst sukzessive aufgetaut und in der zuvor erläuterten Weise über den Brennraum ausgeleitet wird. Die Erfindung ermöglicht damit auch den vereinfachten Einsatz von direkten, d. h. mit Umgebungsluft bzw. Fahrtwind gekühlten Ladeluftkühlern, die zwar im Hinblick auf die Kondenswasserbildung besonders kritisch, jedoch insgesamt weniger aufwändig sind.

Die erfindungsgemäßen Maßnahmen zum dosierten Ausleiten des Kondenswassers sollen nur in kritischen Betriebszuständen des Verbrennungsmotors ausgeführt werden. Kritische Betriebszustände sind solche Betriebszustände, bei denen es im Ladeluftkühler und/oder im nachfolgenden Ansaugtrakt zur Kondenswasserbildung und/oder Eisbildung (Anlagerung von gefrorenem Kondenswasser) kommt oder gekommen ist. Dies kann bspw. mit Sensoren, wie insbesondere Feuchtigkeitssensoren, erfasst bzw. detektiert werden. Kritische Betriebszustände können jedoch auch solche Betriebszustände sein, in denen eine Kondenswasserbildung und/oder Eisbildung vermutet wird (bspw. aufgrund von Erfahrungswerten), zu erwarten ist (bspw. aufgrund von Modellberechnungen und/oder Simulationen) und/oder nicht mit Sicherheit auszuschließen ist, wobei auch hier Sensoren, wie z. B. Temperatursensoren, unterstützend zum Einsatz kommen können. Für das dosierte Ausleiten von Kondenswasser wird der Verbrennungsmotor nach dem erfindungsgemäßen Verfahren betrieben, was z. B. von einem Steuergerät veranlasst wird. Währenddessen wird der Normalbetrieb des Verbrennungsmotors ausgesetzt oder unterbrochen.

Das Vorhandensein von Kondenswasser und/oder Eis ist prinzipiell nach längerem Abstellen des Verbrennungsmotors bei kühlen Umgebungstemperaturen zu erwarten. Besonders kritisch ist das längere Abstellen des Verbrennungsmotors bei Umgebungstemperaturen oberhalb von 0° C, da hier etwaiges im Ladeluftkühler und/oder im nachfolgenden Ansaugtrakt vorhandenes Eis, das sich im vorausgehenden Betrieb des Verbrennungsmotors gebildet hat, mit der Zeit abtaut. Extrem kritisch ist das Wiederstarten des Verbrennungsmotors, insbesondere nach längerem Abstellen, bei Umgebungstemperaturen zwischen 0° C und 5° C, da es hierbei im Ladeluftkühler und/oder im nachfolgenden Ansaugtrakt sowohl zu hoher Kondenswasserbildung (Kondensatabscheidung) als auch zum gleichzeitigen Abtauen von Eis kommen kann. Problematisch ist dann die Kaltstartphase, die die ersten Minuten nach dem Motorstart umfasst, wobei sich diese Kaltstartphase mit dem erfindungsgemäßen Verfahren gefahrlos bewältigen lässt.

Insbesondere ist vorgesehen, dass der Verbrennungsmotor im Zuge des Motorschutzes bei jedem Motorstart, d. h. in der Startphase, und insbesondere bei jedem Kaltstart, d. h. in der Kaltstartphase, nach dem erfindungsgemäßen Verfahren betrieben wird, falls ein kritischer Betriebzustand vorliegt. Ein kritischer Betriebszustand kann mit Sensoren erfasst werden. Es genügt jedoch auch, wenn ein kritischer Betriebszustand vermutet wird, prinzipiell zu erwarten ist oder nicht mit Sicherheit ausgeschlossen werden kann.

Abhängig von der momentanen Einstellung des Ladeluftkühlerventils kann es zu einem verringerten Ladeluftvolumenstrom durch den Ladeluftkühler kommen. Um einen für die Verbrennung optimalen oder erforderlichen Ladeluftvolumenstrom aufrecht zu erhalten ist bevorzugt vorgesehen, dass der Ladeluftvolumenstrom in einen Teilvolumenstrom durch den Ladeluftkühler und in einen Teilvolumenstrom durch einen zum Ladeluftkühler parallelen Bypass aufgeteilt wird. Gegebenenfalls kann hierfür ein ohnehin am Verbrennungsmotor vorgesehener Bypass verwendet werden, so dass kein zusätzlicher Bauraum erforderlich ist.

Der Teilvolumenstrom durch den Ladeluftkühler kann mittels des Ladeluftkühlerventils eingestellt und/oder zeitlich verändert werden, wie obenstehend erläutert. Der Teilvolumenstrom durch den Bypass, der keiner Kühlung unterliegt, kann mittels wenigstens eines Bypassventils gesondert eingestellt und/oder zeitlich verändert werden. Durch die getrennte, jedoch idealerweise aufeinander abgestimmte Einstellung und/oder zeitliche Veränderung der Teilvolumenströme gelingt eine sehr gute Ausleitung des Kondenswassers mit möglichst geringem Einfluss auf den Verbrennungsprozess und ohne Gefährdung des Verbrennungsmotors.

Bevorzugt ist vorgesehen, dass das Ladeluftkühlerventil und ein gegebenenfalls vorhandenes Bypassventil von einem Steuergerät gesteuert und/oder geregelt werden. Bei dem Steuergerät handelt es sich insbesondere um das Motorsteuergerät für den Verbrennungsmotor, welches entsprechend ausgebildet ist.

Die Steuerung oder Regelung des Ladeluftkühlerventils und gegebenenfalls des Bypassventils kann auf den Messwerten wenigstens eines Temperatursensors basieren, der im Ladeluftkühler und/oder im nachfolgenden Ansaugtrakt eingebaut ist. Bevorzugt ist hierbei vorgesehen, dass die Steuerung oder Regelung durch das Steuergerät erfolgt, welches hierzu die Messwerte des Temperatursensors heranzieht und insbesondere auch unter Berücksichtigung abgespeicherter vorausgehender Betriebszustände des Verbrennungsmotors über eine Modellberechnung und/oder Simulation das Vorhandensein von Kondenswasser und/oder Eis erwartet oder zumindest nicht ausschließen kann. Daraufhin kann das Steuergerät das Ladeluftkühlerventil und gegebenenfalls des Bypassventils entsprechend betätigen, um das Kondenswasser über den Brennraum dosiert auszuleiten. Unter Umständen kann hierbei der Fall eintreten, dass kein Kondenswasser und/oder Eis vorhanden ist, aber dennoch entsprechende Maßnahmen eingeleitet werden. Für den Schutz des Motors ist dies jedoch von Vorteil.

Alternativ oder auch ergänzend kann vorgesehen sein, dass die Steuerung oder Regelung des Ladeluftkühlerventils und gegebenenfalls des Bypassventils auf den Messwerten wenigstens eines Feuchtigkeitssensors, der im Bereich des Ladeluftkühlers oder im nachfolgenden Ansaugtrakt eingebaut ist, basiert. Bevorzugt ist auch hierbei vorgesehen, dass die Steuerung oder Regelung durch das Steuergerät erfolgt, welches hierzu die Messwerte des Feuchtigkeitssensors heranzieht und, gegebenenfalls mit einer vereinfachten Modellberechnung und/oder Simulation, das Vorhandensein von Kondenswasser und/oder Eis erfasst. Daraufhin kann das Steuergerät das Ladeluftkühlerventil und gegebenenfalls des Bypassventils entsprechend betätigen.

Der erfindungsgemäße Verbrennungsmotor weist wenigstens einen Verdichter und wenigstens einen dem Verdichter nachgeschalteten Ladeluftkühler auf. Ferner weist der erfindungsgemäße Verbrennungsmotor wenigstens ein Ladeluftkühlerventil auf, mit dem der Ladeluftvolumenstrom durch den Ladeluftkühler einstellbar und/oder zeitlich veränderbar ist und ein Steuergerät, welches das Ladeluftkühlerventil derart steuert oder regelt, dass im Ladeluftkühler und/oder im nachfolgenden Ansaugtrakt vorhandenes Kondenswasser nur in unschädlichen Mengen dem Brennraum sukzessive zugeführt und somit ausgeleitet wird. Der erfindungsgemäße Verbrennungsmotor ist mit dem erfindungsgemäßen Verfahren betreibbar.

Bei dem erfindungsgemäßen Verbrennungsmotor handelt es sich vorzugsweise um den Antriebsmotor eines Kraftfahrzeugs, der insbesondere nach dem Otto- oder Dieselprinzip arbeitet. Für den Betrieb kommen sowohl flüssige als auch gasförmige Kraftstoffe in Betracht, wobei flüssige Kraftstoff vorzugsweise mit einem Einspritzsystem direkt dem Brennraum zugeführt werden.

Bevorzugt ist vorgesehen, dass der erfindungsgemäße Verbrennungsmotor einen zum Ladeluftkühler parallelen Bypass mit wenigstens einem Bypassventil aufweist, so dass der Ladeluftvolumenstrom in einen Teilvolumenstrom durch den Ladeluftkühler und in einen Teilvolumenstrom durch den Bypass aufteilbar ist, wobei der Teilvolumenstrom durch den Bypass mittels des Bypassventils gesondert einstellbar und/oder zeitlich veränderbar ist.

Das Steuergerät ist bevorzugt dafür ausgebildet, das Ladeluftkühlerventil und gegebenenfalls auch das Bypassventil basierend auf den Messwerten wenigstens eines Temperatursensors und/oder Feuchtigkeitssensors zu steuern oder zu regeln, wie obenstehend näher erläutert. Idealerweise ist die Steuerung oder Regelung von Ladeluftkühlerventil und Bypassventil aufeinander abgestimmt, um unter Aufrechterhaltung eines optimalen oder erforderlichen Ladeluftvolumenstroms die dosierte Ausleitung von Kondenswasser zu ermöglichen. Der Temperatursensor und/oder der Feuchtigkeitssensor ist im Bereich des Ladeluftkühlers, insbesondere unmittelbar nach dem Ladeluftkühler, oder in dem nachfolgenden Ansaugtrakt des Verbrennungsmotors positioniert.

Der Ladeluftvolumenstrom kann zumindest zeitweise einen rückgeführten Abgasanteil enthalten, wozu der erfindungsgemäße Verbrennungsmotor mit einer Abgasrückführung bzw. einem Abgasrückführsystem ausgebildet sein kann. Abgase haben typischerweise die Eigenschaft sehr feucht zu sein, was die Kondenswasserbildung und/oder Eisbildung im Ladeluftkühler und/oder dem nachfolgenden Ansaugtrakt tendenziell begünstigt. Die Erfindung ermöglicht eine einfachere Ausgestaltung der Abgasrückführung, da eine etwaige Kondenswasserbildung mit der Erfindung gut gehandhabt werden kann und somit weniger kritisch ist. Anstelle einer Hochdruckabgasrückführung (bei der das rückgeführte Abgas in den bereits verdichteten Ladeluftvolumenstrom eingespeist wird) kann eventuell eine Niederdruckabgasrückführung (bei der das rückgeführte Abgas in den noch unverdichteten Ladeluftvolumenstrom eingespeist wird) eingesetzt werden. Damit kann möglicherweise auch ein Rückführungskühler (AGR-Kühler) entfallen. Ferner wird auch eine dauerhafte und nicht nur zeitweise Abgasrückführung ermöglicht, was im Hinblick auf die Emissionswerte unter Berücksichtigung zukünftiger Grenzwerte von erheblichem Vorteil ist.

Die Erfindung wird nachfolgend beispielhaft und in nicht einschränkender Weise unter Bezugnahme auf die Figuren näher erläutert.
- Fig. 1: zeigt schematisch einen erfindungsgemäßen Verbrennungsmotor.
- Fig. 2: zeigt eine Tabelle mit möglichen Betriebzuständen des Verbrennungsmotors aus Fig. 1.

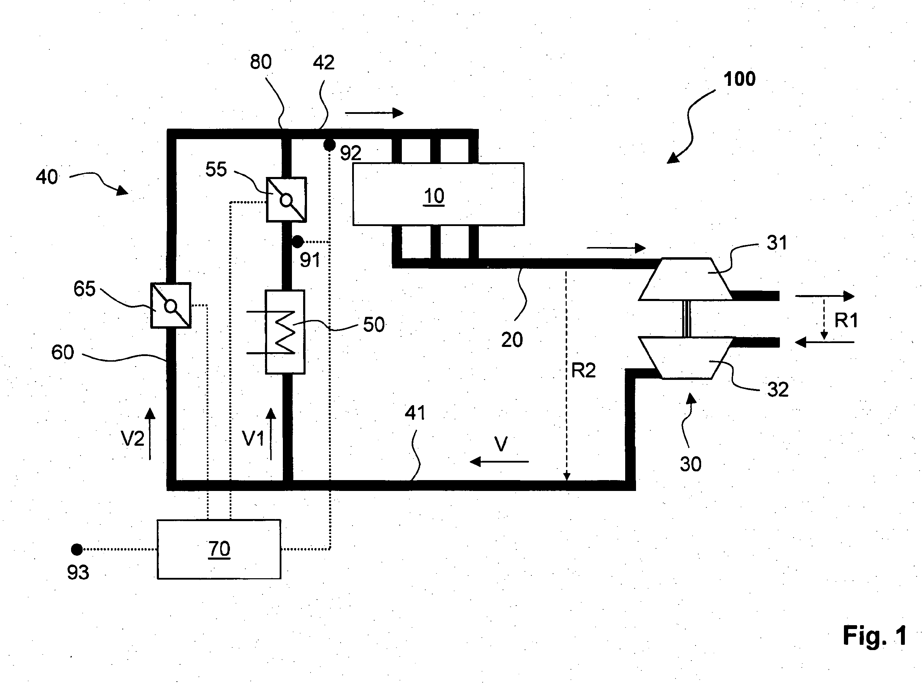

Fig. 1 zeigt einen Verbrennungsmotor 100, der einen Brennraum 10 mit mehreren Zylindern aufweist. In dem vom Brennraum 10 wegführenden Abgasstrang 20 befindet sich eine Turbine 31, die zu einem Turbolader 30 mit einem Verdichter 32 gehört. In dem zum Brennraum 10 führenden Ansaugtrakt 40 befindet sich ein Ladeluftkühler 50 und ein zum Ladeluftkühler 50 paralleler Bypass 60. Über diesen Ansaugtrakt 40 wird dem Brennraum 10 ein vom Verdichter 32 verdichteter Ladeluftvolumenstrom V zugeführt, wobei es sich um Frischluft oder um ein Abgas-Luftgemisch (Frischluft mit einem Anteil aus rückgeführtem Abgas) handeln kann. Der Verbrennungsmotor 100 umfasst ferner eine optionale (zuschaltbare) Abgasrückführung R1 (Niederdruckabgasrückführung) und/oder R2 (Hochdruckabgasrückführung). Der vor dem Ladeluftkühler 50 befindliche Abschnitt des Ansaugtrakts 40 ist mit 41 und der dem Ladeluftkühler 50 nachfolgende Abschnitt des Ansaugtrakts 40 ist mit 42 bezeichnet. Für die Verdichtung des Ladeluftvolumenstroms V kann anstelle des Turboladers 30 auch ein Kompressor oder dergleichen vorgesehen sein.

Der durch den Ansaugtrakt 40 strömende und vom Verdichter 32 verdichtete Ladeluftvolumenstrom V wird je nach Betriebszustand des Verbrennungsmotors 100 in einen Teilvolumenstrom V1 durch den Ladeluftkühler 50 und in einen Teilvolumenstrom V2 durch den Bypass 60 aufgeteilt, wobei die beiden Teilvolumenströme V1 und V2 an einem Zusammenführungspunkt 80 wieder zusammengebracht und dem Brennraum 10 zugeführt werden. Ebenso sind Betriebszustände vorgesehen, in denen der Ladeluftvolumenstrom V nur durch den Ladeluftkühler 50 (V1 = V) oder nur durch den Bypass 60 (V2 = V) geführt wird.

Zur Steuerung oder Regelung des Teilvolumenstroms V1 durch den Ladeluftkühler 50 ist in der Ladeluftkühlerstrecke ein Ladeluftkühlerventil 55 angeordnet. In dem gezeigten Beispiel ist das Ladeluftkühlerventil 55 bezüglich der Durchströmungsrichtung nach dem Ladeluftkühler 50 angeordnet. Dieses Ladeluftkühlerventil 55 kann beheizt sein, um die Funktionalität dieses Ventils zu gewährleisten. Alternativ kann das Ladeluftkühlerventil 55 auch vor dem Ladeluftkühler 50 angeordnet sein. Zur Steuerung oder Regelung des Teilvolumenstroms V2 durch den Bypass 60 ist in der Bypassstrecke ein Bypassventil 65 vorgesehen. Die Steuerung oder Regelung des Ladeluftkühlerventils 55 und des Bypassventils 65 erfolgt durch ein Steuergerät 70.

Im Betrieb des Verbrennungsmotors 100 kann es im Ladeluftkühler 50, insbesondere falls es sich um einen direkten Ladeluftkühler 50 handelt, und in dem nachfolgenden Ansaugtrakt 42 zur Kondenswasserbildung und/oder sogar zur Eisbildung kommen. Ursächlich hierfür ist die durch die Abkühlung des Teilvolumenstroms V1 im Ladeluftkühler 50 bewirkte Übersättigung, so dass das im Teilvolumenstrom V1 gebundene Wasser (Dampf) als Kondensat bzw. Kondenswasser ausfällt. Die Menge des sich bildenden Kondenswassers ist abhängig von den im Teilvolumenstrom V1 gegebenen Verhältnissen (u. a. Temperatur, Druck und relative Feuchte). Besonders kritisch sind Verhältnisse im Bereich des Taupunkts.

Im Hinblick auf eine solche Kondenswasserbildung ist eine hohe relative Feuchte im Ladeluftvolumenstrom V bzw. im Teilvolumenstrom V1 in Verbindung mit niedrigen Temperaturen, die z. B. zwischen 0° C und 5° C liegen, besonders kritisch, insbesondere dann, wenn sich der Verbrennungsmotor 100 in einer Kaltstartphase befindet, weil es hier zu starker Kondenswasserbildung kommen kann und gleichzeitig im vorausgegangenen Betrieb des Verbrennungsmotors 100 gebildetes Eis abtauen kann oder bereits abgetaut ist.

Mittels der Temperatursensoren 91, 92 und 93 können die Temperatur unmittelbar nach dem Ladeluftkühler 50, die Temperatur nach dem Zusammenführungspunkt 80 und die Umgebungstemperatur gemessen werden. Die gemessenen Werte werden dem Steuergerät 70 mitgeteilt, welches basierend auf einer Modellberechnung das Vorhandensein von Kondenswasser und/oder Eis erkennt, erwartet oder zumindest ein solches Vorhandensein nicht ausschließen kann, was einem kritischen Betriebszustand entspricht. Anstelle der Temperatursensoren 91 und 92, oder ergänzend zu diesen Temperatursensoren, können auch Feuchtigkeitssensoren eingesetzt werden.

Liegt ein kritischer Betriebszustand vor, wird der Normalbetrieb des Verbrennungsmotors 100 unterbrochen bzw. ausgesetzt. Ferner wird das Ladeluftkühlerventil 55 von dem Steuergerät 70 teilweise oder vollständig geschlossen und der Bypass 60 wird durch vollständiges oder teilweises Öffnen des Bypassventils 65 geöffnet. Zumindest das im Ladeluftkühler 50 befindliche Kondenswasser und das im nachfolgenden Ansaugtrakt (zwischen Ladeluftkühler 50 und Zusammenführungspunkt 80) vorhandene Kondenswasser wird dann dem Brennraum 10 nicht schlagartig, sondern nur in unschädlichen Mengen sukzessive zugeführt (dosierte Ausleitung). Die Einstellungen des Ladeluftkühlerventils 55 und des Bypassventils 65 können mit fortschreitender Ausleitung des Kondenswassers zeitlich verändert werden, was gesteuert oder geregelt erfolgen kann. Ist die Ausleitung des Kondenswassers beendet, geht der Verbrennungsmotor 100 in den Normalbetrieb über.

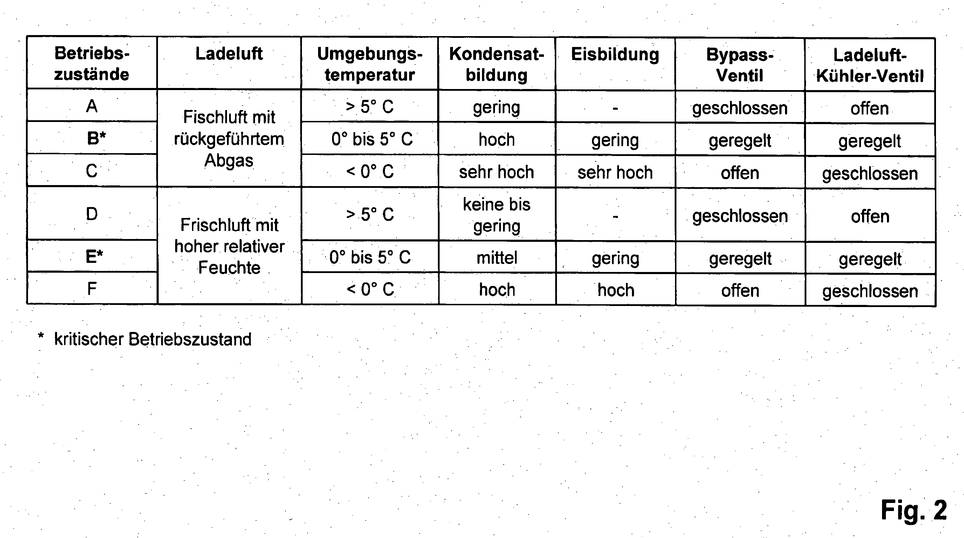

Fig. 2 zeigt tabellarisch, mit vereinfacht wiedergegebenen Parametern, mögliche Betriebszustände des Verbrennungsmotors 100, die mit A bis F bezeichnet sind. Der Wechsel zwischen den verschiedenen Betriebszuständen wird, bspw. in Abhängigkeit von der Umgebungstemperatur, vom Steuergerät 70 bewerkstelligt. Die Betriebszustände A, C, D und F können als Normalbetrieb des Verbrennungsmotors 100 angesehen werden. Die Betriebszustände B und E sind als kritische Betriebszustände anzusehen, die erfindungsgemäß gehandhabt werden. Die in diesen kritischen Betriebszuständen zur dosierten Ausleitung von Kondenswasser und/oder Eis erfolgende Betätigung des Ladeluftkühlerventils 55 und des Bypassventils 65 durch das Steuergerät 70 ist nicht einschränkend mit "geregelt" bezeichnet.

In den zum Normalbetrieb gehörenden Betriebzuständen C und F ist das Bypassventil 65 zumindest teilweise geöffnet und das Ladeluftkühlerventil 55 ist zumindest teilweise geschlossen, um eine Kondenswasserbildung zu verhindern, wie eingangs erläutert. Falls hierbei die Ladeluftkühlerstrecke durch das Ladeluftkühlerventil 55 vollständig geschlossen werden soll, kann es dennoch, als Folge von Leckagen am Ladeluftkühlerventil 55 und des sich einstellendenden sehr geringen Teilvolumenstroms V1, zu einer erheblichen Kondenswasserbildung und/oder Eisbildung im Ladeluftkühler 50 und/oder im nachfolgenden Ansaugtrakt 42 kommen. Problematisch ist dann das nachfolgende Abstellen des Verbrennungsmotors 100 bei Umgebungstemperaturen gleich oder größer 0° C (wie obenstehend erläutert).

Auch das Beenden der Betriebszustände C und F ist problematisch, so dass hier für eine bestimmte Zeitspanne zunächst in die Betriebszustände B bzw. E gewechselt werden sollte, was idealerweise selbsttätig vom Steuergerät 70 veranlasst wird. Dieser Wechsel in die Betriebszustände B bzw. E kann zwangsläufig und unabhängig davon erfolgen, ob es tatsächlich zu einer erfassten bzw. detektierten Kondenswasserbildung und/oder Eisbildung gekommen ist, wobei ein kritischer Betriebszustand vermutet wird. Eine Kondenswasserbildung und/oder Eisbildung kann aber auch mit wenigstens einem Feuchtigkeitssensor erfasst bzw. detektiert werden, der ergänzend oder alternativ zu den Temperatursensoren 91 und/oder 92 positioniert ist.

## Patentansprüche

1. Verfahren zum Betrieb eines Verbrennungsmotors (100) mit Aufladung und Ladeluftkühlung, bei dem in einem kritischen Betriebszustand (B; E) der Ladeluftvolumenstrom (V1) durch einen Ladeluftkühler (50) mittels wenigstens einem Ladeluftkühlerventil (55) derart eingestellt und/oder zeitlich verändert wird, dass im Ladeluftkühler (50) und/oder im nachfolgenden Ansaugtrakt (42) vorhandenes Kondenswasser nur in unschädlichen Mengen dem Brennraum (10) sukzessive zugeführt und somit ausgeleitet wird.

2. Verfahren nach Anspruch 1, **dadurch gekennzeichnet, dass** ein kritischer Betriebszustand des Verbrennungsmotors (100) die Kaltstartphase ist.

3. Verfahren nach Anspruch 1 oder 2, **dadurch gekennzeichnet, dass** der Ladeluftvolumenstrom (V) in einen Teilvolumenstrom (V1) durch den Ladeluftkühler (50) und in einen Teilvolumenstrom (V2) durch einen Bypass (60) aufgeteilt wird, wobei der Teilvolumenstrom (V2) durch den Bypass (60) mit wenigstens einem Bypassventil (65) gesondert eingestellt und/oder zeitlich verändert werden kann.

4. Verfahren nach einem der vorausgehenden Ansprüche, **dadurch gekennzeichnet, dass** das Ladeluftkühlerventil (55) und ein gegebenenfalls vorhandenes Bypassventil (65) von einem Steuergerät (70) gesteuert und/oder geregelt werden.

5. Verfahren nach Anspruch 4, **dadurch gekennzeichnet, dass** die Steuerung oder Regelung des Ladeluftkühlerventils (55) und gegebenenfalls des Bypassventils (65) auf den Messwerten wenigstens eines Temperatursensors (91; 92), der im Bereich des Ladeluftkühlers (50) oder im nachfolgenden Ansaugtrakt (42) angeordnet ist, basiert.

6. Verfahren nach Anspruch 4, **dadurch gekennzeichnet, dass** die Steuerung oder Regelung des Ladeluftkühlerventils (55) und gegebenenfalls des Bypassventils (65) auf den Messwerten wenigstens eines Feuchtigkeitssensors, der im Bereich des Ladeluftkühlers (50) oder im nachfolgenden Ansaugtrakt (42) angeordnet ist, basiert.

7. Verbrennungsmotor (100) mit wenigstens einem Verdichter (32) und wenigstens einem dem Verdichter (32) nachgeschalteten Ladeluftkühler (50), **gekennzeichnet durch** wenigstens ein Ladeluftkühlerventil (55), mit dem der Ladeluftvolumenstrom (V1) **durch** den Ladeluftkühler (50) einstellbar und/oder zeitlich veränderbar ist und **durch** ein Steuergerät (70), welches das Ladeluftkühlerventil (55) derart steuert oder regelt, dass im Ladeluftkühler (50) oder im nachfolgenden Ansaugtrakt (42) vorhandenes Kondenswasser nur in unschädlichen Mengen dem Brennraum (10) sukzessive zugeführt und somit ausgeleitet wird.

8. Verbrennungsmotor (100) nach Anspruch 7, **gekennzeichnet durch** einen zum Ladeluftkühler (50) parallelen Bypass (60) mit wenigstens einem Bypassventil (65), so dass der Ladeluftvolumenstrom (V) in einen Teilvolumenstrom (V1) **durch** den Ladeluftkühler (50) und in einen Teilvolumenstrom (V2) **durch** den Bypass (60) aufteilbar ist, wobei der Teilvolumenstrom (V2) **durch** den Bypass (60) mittels des Bypassventils (65) gesondert einstellbar und/oder zeitlich veränderbar ist.

9. Verbrennungsmotor (100) nach Anspruch 7 oder 8, **dadurch gekennzeichnet, dass** das Steuergerät (70) dazu ausgebildet ist, das Ladeluftkühlerventil (55) und gegebenenfalls das Bypassventil (65) basierend auf den Messwerten wenigstens eines Temperatursensors (91; 92; 93) und/oder Feuchtigkeitssensors zu steuern oder zu regeln.

10. Verbrennungsmotor (100) nach Anspruch 7, 8 oder 9, **dadurch gekennzeichnet, dass** dieser eine Abgasrückführung (R1; R2) aufweist, so dass der Ladeluftvolumenstrom (V) zumindest zeitweise einen rückgeführten Abgasanteil enthält.

## Claims

1. Method for operating a internal combustion engine (100) having turbocharging and charge air cooling, wherein in a critical operating state (B; E) the charge air volume flow (V1) through a charge air cooler (50) is set and/or changed over time by means of at least one charge air cooler valve (55) such that condensation water present in the charge air cooler (50) and/or in the downstream inlet duct (42) is successively fed only in harmless amounts to the combustion chamber (10) and is thus discharged.

2. Method according to claim 1, **characterised in that** a critical operating state of the internal combustion engine (100) is the cold start phase.

3. Method according to either claim 1 or claim 2, **characterised in that** the charge air volume flow (V) is divided into a partial volume flow (V1) through the charge air cooler (50) and a partial volume flow (V2) through a bypass (60), the partial volume flow (V2) through the bypass (60) being separately settable and/or changeable over time by means of at least one bypass valve (65).

4. Method according to any of the preceding claims, **characterised in that** the charge air cooler valve (55) and an optional bypass valve (65) are controlled in an open-loop and/or closed-loop manner by a control device (70).

5. Method according to claim 4, **characterised in that** the charge air cooler valve (55) and optionally the bypass valve (65) are controlled in an open-loop or closed-loop manner as a function of the measured values of at least one temperature sensor (91; 92) which is arranged in the region of the charge air cooler (50) or in the downstream inlet duct (42).

6. Method according to claim 4, **characterised in that** the charge air cooler valve (55) and optionally the bypass valve (65) are controlled in an open-loop or closed-loop manner as a function of the measured values of at least one humidity sensor which is arranged in the region of the charge air cooler (50) or in the downstream inlet duct (42).

7. Internal combustion engine (100), comprising at least one compressor (32) and at least one charge air cooler (50) downstream of said compressor (32), **characterised by** at least one charge air cooler valve (55), using which the charge air volume flow (V1) through the charge air cooler (50) can be set and/or changed over time, and by a control device (70), which controls the charge air cooler valve (55) in an open-loop or closed-loop manner such that condensation water present in the charge air cooler (50) or in the downstream inlet duct (42) is successively fed only in harmless amounts to the combustion chamber (10) and is thus discharged.

8. Combustion engine (100) according to claim 7, **characterised by** a bypass (60) in parallel with the charge air cooler (50), said bypass having at least one bypass valve (65) so that the charge air volume flow (V) can be divided into a partial volume flow (V1) through the charge air cooler (50) and a partial volume flow (V2) through the bypass (60), the partial volume flow (V2) through the bypass (60) being separately settable and/or changeable over time by means of the bypass valve (65).

9. Internal combustion engine (100) according to either claim 7 or claim 8, **characterised in that** the control device (70) is configured to control the charge air cooler valve (55) and optionally the bypass valve (65) in an open-loop or closed-loop manner as a function of the measured values of at least one temperature sensor (91; 92; 93) and/or humidity sensor.

10. Internal combustion engine (100) according to claim 7, 8 or 9, **characterised in that** said internal combustion engine comprises an exhaust gas recirculation system (R1; R2) so that the charge air volume flow (V) at least temporarily contains a proportion of re-circulated exhaust gas.

## Revendications

1. Procédé de fonctionnement d'un moteur à combustion interne (100) avec suralimentation et refroidissement de l'air de suralimentation, dans lequel, dans un état opérationnel critique (B ; E), le courant volumique d'air de suralimentation (V1) est réglé et/ou modifié dans le temps par un refroidisseur d'air de suralimentation (50) au moyen d'au moins une soupape de refroidisseur d'air de suralimentation (55) de sorte que l'eau de condensation qui est présente dans le refroidisseur d'air de suralimentation (50) et/ou dans la conduite d'admission (42) qui suit soit acheminée et donc déchargée successivement uniquement en quantités inoffensives à la chambre de combustion (10).

2. Procédé selon la revendication 1, **caractérisé en ce qu'**un état opérationnel critique du moteur à combustion interne (100) est la phase de démarrage à froid.

3. Procédé selon la revendication 1 ou la revendication 2, **caractérisé en ce que** le courant volumique d'air de suralimentation (V) est divisé en un courant volumique partiel (V1) à travers le refroidisseur d'air de suralimentation (50) et en un courant volumique partiel (V2) à travers une dérivation (60), dans lequel le courant volumique partiel (V2) passant par la dérivation (60) peut être réglé et/ou modifié dans le temps séparément par au moins une soupape de dérivation (65).

4. Procédé selon l'une quelconque des revendications précédentes, **caractérisé en ce que** la soupape (55) du refroidisseur d'air de suralimentation et la soupape de dérivation éventuellement présente (65) sont commandées et/ou régulées par un appareil de commande (70).

5. Procédé selon la revendication 4, **caractérisé en ce que** la commande ou la régulation de la soupape (55) du refroidisseur d'air de suralimentation et éventuellement de la soupape de dérivation (65) est basée sur les valeurs de mesure d'au moins un capteur de température (91 ; 92) qui est aménagé dans la zone du refroidisseur d'air de suralimentation (50) ou dans la conduite d'admission (42) qui suit.

6. Procédé selon la revendication 4, **caractérisé en ce que** la commande ou la régulation de la soupape (55) du refroidisseur d'air de suralimentation et éventuellement de la soupape de dérivation (65) est basée sur les valeurs de mesure d'au moins un capteur d'humidité qui est aménagé dans la zone du refroidisseur d'air de suralimentation (50) ou dans la conduite d'admission (42) qui suit.

7. Moteur à combustion interne (100) comprenant au moins un compresseur (32) et au moins un refroidisseur d'air de suralimentation (50) monté en aval du compresseur (32), **caractérisé par** au moins une soupape de refroidisseur d'air de suralimentation (55), avec laquelle le courant volumique d'air de suralimentation (V1) peut être réglé et/ou modifié dans le temps par le refroidisseur d'air de suralimentation (50) et par un appareil de commande (70) qui commande ou règle la soupape (55) du refroidisseur d'air de suralimentation en sorte que l'eau de condensation présente dans le refroidisseur d'air de suralimentation (50) ou dans la conduite d'admission (42) qui suit soit acheminée et donc déchargée successivement uniquement en quantités inoffensives à la chambre de combustion (10).

8. Moteur à combustion interne (100) selon la revendication 7, **caractérisé par** une dérivation (60) parallèle au refroidisseur d'air de suralimentation (50) avec au moins une soupape de dérivation (65) de sorte que le courant volumique d'air de suralimentation (V) puisse être divisé en un courant volumique partiel (V1) à travers le refroidisseur d'air de suralimentation (50) et en un courant volumique partiel (V2) à travers la dérivation (60), dans lequel le courant volumique partiel (V2) peut être réglé et/ou modifié dans le temps séparément par la dérivation (60) au moyen d'au moins la soupape de dérivation (65).

9. Moteur à combustion interne (100) selon la revendication 7 ou la revendication 8, **caractérisé en ce que** l'appareil de commande (70) est conçu pour commander ou réguler la soupape (55) du refroidisseur d'air de suralimentation et éventuellement la soupape de dérivation (65) sur la base des valeurs de mesure d'au moins un capteur de température (91 ; 92 ; 93) et/ou un capteur d'humidité.

10. Moteur à combustion interne (100) selon la revendication 7, 8 ou 9, **caractérisé en ce que** celui-ci présente un retour de gaz d'échappement (R1 ; R2) de sorte que le courant volumique d'air de suralimentation (V) contienne au moins par moments une fraction de gaz d'échappement recyclée.
